# EUROPEAN PATENT SPECIFICATION

(11) **EP 4 524 428 B1**
(45) Date of publication and mention of the grant of the patent: **05.08.2026**
(21) Application number: 23864432.2
(22) Date of filing: 29.06.2023
(51) Int. Cl.: F16H 37/12, F16H 25/20, F16B 7/10, B66F 3/10

(54) **TRANSMISSION ASSEMBLY OF LIFTING COLUMN, AND LIFTING COLUMN**
GETRIEBEANORDNUNG EINER HEBESÄULE UND HEBESÄULE
ENSEMBLE DE TRANSMISSION DE COLONNE DE LEVAGE, ET COLONNE DE LEVAGE

(30) Priority: 14.09.2022 CN 202222460256 U
(43) Date of publication of application: 19.03.2025
(73) Proprietor: Zhejiang Jiecang Linear Motion Technology Co., Ltd, Shaoxing, Zhejiang 312500 (CN)
(72) Inventor: LI, Weiqiang, Shaoxing, Zhejiang 312500 (CN); WANG, Zhengfang, Shaoxing, Zhejiang 312500 (CN); LI, Zhanyuan, Shaoxing, Zhejiang 312500 (CN)
(74) Representative: karo IP
(86) International application number: PCT/CN2023/103788
(87) International publication number: WO 2024/055693

(56) References cited:
- CN-A- 107 725 705
- CN-A- 109 399 502
- CN-A- 111 237 416
- CN-A- 112 855 887
- CN-U- 218 598 753
- DE-A1- 102020 113 958
- DE-A1- 19 736 503
- JP-A- 2011 052 760
- JP-A- 2017 166 546
- US-A1- 2015 047 443

## Description

### FIELD

The subject matter described herein relates to linear actuators, and more particularly relates to a lifting column transmission assembly and a lifting column.

### BACKGROUND

A lifting column is designed to drive a part to move in a vertical direction. The lifting column has a transmission assembly provided therein. An existing transmission assembly adopts a planetary gear set for power transmission to drive a sleeve and a screw rod to extend and retract; the planetary gear set generally comprises a planetary carrier and a planetary gear; upon transmission, the planetary gear is actuated to drive the planetary carrier to rotate to thereby drive a main shaft to rotate, where the main shaft is formed of a screw rod or a sleeve, the main shaft and the planetary carrier being spline-fitted therebetween. In a case of a threestage lifting column, a further screw rod or sleeve would also be provided at an outer side of the main shaft, so that upon transmission, rotation of the main shaft can drive the sleeve or the screw rod at the outer side to extend or retract relative to the main shaft. Since the power is transmitted from inside to outside, vertical motion stability of such a conventional transmission assembly needs improvement.

CN 109 399 502 A and US 2015/047443 A1 describe a transmission assembly for a lifting stand column and a lifting stand column.

### SUMMARY

A lifting column transmission assembly according to claim 1 is provided, which at least solves stability issues of conventional transmission assemblies during telescopic movement Advantageous embodiments of the present invention are described in the dependent claims.

The invention adopts a technical solution below:
A lifting column transmission assembly, comprising a drive, a first sleeve, and a second sleeve disposed in the first sleeve, in the second sleeve being provided a first screw rod and a second screw rod, wherein the transmission assembly further comprises a planetary gear set in transmission fit with a drive shaft of the drive; the planetary gear set comprises a planetary gear and an outer ring gear meshing with the planetary gear; the first sleeve is in transmission fit with the outer ring gear; the first sleeve and the second sleeve are operable to rotate synchronously; the first sleeve and the second sleeve are operable to telescope axially relative to each other; and one end of the second sleeve is connected to the first screw rod in a threaded transmission manner, and an opposite end of the second sleeve is connected to the second screw rod in a threaded transmission manner.

Further, the second screw rod is operable to telescope relative to the first screw rod, a first nut being mounted on the first screw rod in a thread fitting manner, the second sleeve being connected to the first nut, the first nut being spline-fitted with the first sleeve, whereby the second sleeve is driven to telescope relative to the first sleeve.

Further, the second screw rod is disposed in the first screw rod, the second screw rod projecting out of the first screw rod, the second sleeve being spline-fitted with the first sleeve, a second nut fitted with the second screw rod being mounted at an end portion of the second sleeve, whereby the second screw rod is driven to telescope relative to the first screw rod.

Based on the above technical solution, the first sleeve sleeves over the outer ring gear, an outer ring of the outer ring gear being spline-fitted with an inner wall of the first sleeve.

Based on the above technical solution, a gripper block is arranged for one of the outer ring gear and the first sleeve, and an engaging groove is arranged for the other one of the outer ring gear and the first sleeve, the engaging groove being fitted with the gripper block to secure the outer ring gear on the first sleeve.

Based on the above technical solution, an insertion groove is formed on the outer ring gear, the first sleeve being inserted in the insertion groove and spline-fitted with an inner wall of the insertion groove.

Based on the above technical solution, the planetary gear set further comprises a planetary carrier and a fixed shaft mounted on the planetary carrier, the planetary gear being rotatably mounted on the fixed shaft, a coupling member configurable to axially limit the planetary gear being provided on the planetary carrier.

Based on the above technical solution, the coupling member is attached to the planetary carrier via a fastener, the fastener passing through the coupling member and being then securely locked on the fixed shaft so as to mount the coupling member on the planetary carrier; or, the coupling member is attached to the planetary carrier via a fastener, and an attachment post is arranged on the planetary carrier, the fastener passing through the coupling member and being then securely locked on the attachment post so as to mount the coupling member on the planetary carrier.

Based on the above technical solution, one end of the outer ring gear abuts against the planetary carrier, and an opposite end of the outer ring gear abuts against the coupling member.

Based on the above technical solution, the planetary gear set further comprises a planetary carrier, a coupling member being arranged on the planetary carrier, the planetary gear and the outer ring gear being disposed between the coupling member and the planetary carrier, the first screw rod being connected to the coupling member, the second screw rod being operable to telescope axially relative to the first screw rod.

Based on the above technical solution, a first limiting portion is arranged on the coupling member, a second limiting portion is arranged on the first screw rod, and an insertion opening is defined on the coupling member, the first screw rod being inserted in the insertion opening so that the first limiting portion and the second limiting portion are fitted to maintain the first screw rod and the coupling member relatively stationary.

Based on the above technical solution, the coupling member is formed of a plate body, one end of the first screw rod connected to the coupling member extending outwardly in a radial direction to form a collar fitted with an edge of the plate body, one end of the outer ring gear abutting against the planetary carrier, an opposite end of the outer ring gear abutting against the collar.

Based on the above technical solution, the second screw rod sleeves over the first screw rod, the second sleeve being spline-fitted with the first sleeve, a second nut fitted with the second screw rod being mounted at an end portion of the second sleeve, whereby the second screw rod is driven to telescope relative to the first screw rod.

Based on the above technical solution, the drive comprises a housing and an electric motor disposed in the housing, an axial centerline of an output shaft of the electric motor being parallel to an axial centerline of the first sleeve, at least one planetary reduction gear set in transmission fit with the output shaft being arranged in the housing.

A lifting column comprises an inner tube maintaining fixed relative to a drive, an intermediate tube sleeving over the inner tube, an outer tube sleeving over the intermediate tube, and the lifting column transmission assembly according to any of claims 1 through 14, the outer tube being mounted on a first screw rod or a second screw rod, the intermediate tube being mounted on a second sleeve and being in rotating fit with the second sleeve.

The invention offers the following benefits:
The transmission assembly described herein is applied to a lifting column to allow for the latter to implement a vertical movement. The drive, once being activated, can supply power to drive the planetary gear to rotate, the rotating planetary gear drives the outer ring gear to rotate, the rotating outer ring gear drives the first sleeve to move, and then the moving first sleeve brings the second sleeve to rotate; the rotating second sleeve is given an axial displacement due to its threaded fitting with the first screw rod and the second screw rod while driving one of the first screw rod and the second screw rod to move axially.

The planetary gear set can transmit the power supplied by the drive from inside to outside to the outer ring gear so that the outer ring gear drives the first sleeve at the outermost side to rotate, whereby the first sleeve transmits the power from outside to inside, resulting in a more stable power transmission during the lifting process of the transmission assembly. In conventional technologies, the planetary gear would be driven to rotate so as to bring the planetary carrier to rotate; a power output structure would be arranged on the planetary carrier, where the screw rod or sleeve is fitted with the output structure so that the screw rod or the sleeve is driven to extend or retract by the planetary carrier. Different from the conventional technologies, in the present application, the planetary carrier maintains fixed, the drive drives the planetary gear to rotate, and then the rotating planetary gear drives the outer ring gear to rotate, whereby the torque transmitted from the outer ring gear to the first sleeve is amplified, which increases load capacity of the transmission assembly. In addition, the larger torque reduces the instantaneous current of the drive upon activation of the lifting column, which lowers failure probability of the drive caused by an otherwise excessive instantaneous current.

Furthermore, the first sleeve sleeves over the outer ring gear, an outer ring of the outer ring gear being spline-fitted with an inner wall of the first sleeve. By arranging the first sleeve to sleeve over the outer ring gear, the spacing between the first sleeve and the outer ring gear is shortened, which can reduce the mounting distance to thereby reduce the length of the transmission assembly. In addition, this also increases the contact area between the first sleeve and the outer ring gear, as well as the fitting strength therebetween, leading to a more stable transmission. If a connection structure connected to the first sleeve and the outer ring gear respectively were adopted to transmit power, it likely occurs that the connection structure between the first sleeve and the outer ring gear would be damaged under an excessive load. However, the spline-fitting manner adopted herein allows for the outer ring gear to transmit power to the first sleeve just by arranging the first sleeve to sleeve over the outer ring gear.

Furthermore, a gripper block is arranged for one of the outer ring gear and the first sleeve, and an engaging groove is arranged for the other one of the outer ring gear and the first sleeve, the engaging groove being fitted with the gripper block to secure the outer ring gear on the first sleeve. The fitting between the gripper block and the engaging groove can limit axial displacement of the first sleeve relative to the outer ring gear, preventing movement of the first sleeve relative to the outer ring gear causing disengagement which would otherwise interrupt power transmission.

Furthermore, an insertion groove is formed on the outer ring gear, the first sleeve being inserted in the insertion groove and spline-fitted with an inner wall of the insertion groove. By inserting the first sleeve in the insertion groove, the contact area between the first sleeve and the outer ring gear increases, which increases fitting strength, where the first sleeve has a size smaller than that of the outer ring gear so that the radial size of the transmission assembly can be reduced.

Furthermore, the planetary gear set further comprises a planetary carrier and a fixed shaft mounted on the planetary carrier, the planetary gear being rotatably mounted on the fixed shaft, a coupling member configurable to axially limit the planetary gear being provided on the planetary carrier. By mounting the planetary gear on the fixed shaft, the planetary gear is driven by the drive to rotate relative to the planetary carrier; the coupling member arranged on the planetary carrier can axially limit the planetary gear, preventing the planetary gear from axial displacement during transmission which would otherwise affect the meshing transmission between the planetary gear and the outer ring gear.

Furthermore, one end of the outer ring gear abuts against the planetary carrier, and an opposite end of the outer ring gear abuts against the coupling member. The coupling member and the planetary carrier can axially limit the outer ring gear to prevent axial displacement of the outer ring gear, which ensures stability during transmission; meanwhile, as the planetary gear is limited by the coupling member, the outer ring gear and the planetary gear maintain relatively stationary in the axial direction during the transmission, which prevents wear to the teeth of the outer ring gear and the planetary gear otherwise affecting transmission efficiency.

Furthermore, the planetary gear set further comprises a planetary carrier, a coupling member being arranged on the planetary carrier, the planetary gear and the outer ring gear being disposed between the coupling member and the planetary carrier, the first screw rod being connected to the coupling member, the second screw rod being operable to telescope axially relative to the first screw rod. Since the coupling member is mounted on the planetary carrier to maintain fixed with respect to the planetary carrier while the first screw rod is connected to the coupling member so as to be capable of maintaining fixed with respect to the coupling member, when the second sleeve is driven by the first sleeve to rotate, the threaded fitting between the second sleeve and the first screw rod does not drive the first screw rod to move, so that the second sleeve can extend and retract relative to the first screw rod; meanwhile, due to the threaded fitting between the second sleeve and the second screw rod, the second screw rod is driven to move relative to the first screw rod.

Furthermore, a first limiting portion is arranged on the coupling member, a second limiting portion is arranged on the first screw rod, and an insertion opening is defined by the coupling member, the first screw rod being inserted in the insertion opening so that the first limiting portion and the second limiting portion are fitted to maintain the first screw rod and the coupling member relatively stationary. The first screw rod can maintain stationary relative to the coupling member due to fitting between the first limiting portion and the second limiting portion, so that the first screw rod does not rotate or move axially with movement of the second screw rod. The insertion opening allows for inserting the first screw rod, which facilitates alignment between the first limiting portion and the second limiting portion, thereby enhancing assembly efficiency and easing assembly operation.

Furthermore, the coupling member is formed of a plate body, one end of the first screw rod connected to the coupling member extending outwardly in a radial direction to form a collar fitted with an edge of the plate body, one end of the outer ring gear abutting against the planetary carrier, an opposite end of the outer ring gear abutting against the collar. The collar envelops the coupling member so that the first screw rod can maintain fixed relative to the coupling member; as such, the first screw rod and the coupling member maintain relatively stationary during telescoping of the transmission assembly. The collar protrudes above the edge of the plate body in the radial direction, which can also abut against the outer ring gear so as to axially limit the outer ring gear, preventing the outer ring gear from axial displacement during the process of transmitting which would otherwise affect transmission.

According to the invention the second screw rod is operable to telescope relative to the first screw rod, a first nut being mounted on the first screw rod in a thread fitting manner, the second sleeve being connected to the first nut, the first nut being spline-fitted with the first sleeve, whereby the second sleeve is driven to telescope relative to the first sleeve. The first sleeve, which is spline-fitted with the first nut, drives the first nut to rotate synchronously, and the first nut, which is thread-fitted with the first screw rod, moves along the axial direction of the first screw rod, whereby the second sleeve is pushed to extend and retract relative to the first sleeve.

According to the invention the second screw rod is disposed in the first screw rod, the second screw rod projecting out of the first screw rod, the second sleeve being spline-fitted with the first sleeve, a second nut fitted with the second screw rod being mounted at an end portion of the second sleeve, whereby the second screw rod is driven to telescope relative to the first screw rod. The spline-fitting between the second sleeve and the first sleeve allows for synchronous rotation between the second sleeve and the first sleeve; due to the large contact area and the high fitting strength between the second sleeve and the first sleeve, the torque received at the position where the second sleeve and the first nut are connected can be reduced. The moving second sleeve may bring the second nut to move synchronously; the thread-fitting between the second nut and the second screw rod allows for the second nut to bring the second screw rod to move axially together, while on the lifting column, the second screw rod would be attached to an external part to drive the part to lift; due to a limitation imposed by the external part, rotation of the second screw rod is also limited; in this way, the second nut also rotates relative to the second screw rod, driving the second screw rod to move axially relative to the second nut, so that the second screw rod moves at a higher velocity than that of the second sleeve. Since neither of the first screw rod and the second screw rod needs to rotate, a need of arranging an internal bearing is eliminated, which reduces manufacture cost.

The invention further describes an alternative technical solution, i.e., the second screw rod sleeves over the first screw rod, the second sleeve being spline-fitted with the first sleeve, a second nut fitted with the second screw rod being mounted at an end portion of the second sleeve, whereby the second screw rod is driven to telescope relative to the first screw rod.

Furthermore, the drive comprises a housing and an electric motor disposed in the housing, an axial centerline of an output shaft of the electric motor being parallel to an axial centerline of the first sleeve, at least one planetary reduction gear set in transmission fit with the output shaft being arranged in the housing. In this invention, the transmission assembly is applied in a vertical column. By arranging the planetary reduction gear set, the revolving speed outputted by the electric motor can be reduced so as to prevent lifting too fast, which may also increase the output torque as well as load capacity of the lifting column.

The above and other features and advantages of the invention will be described in detail through specific implementations with reference to the accompanying drawings.

### BRIEF DESCRIPTION OF THE DRAWINGS

Hereinafter, the invention will be further explained with reference to the accompanying drawings below:
Fig. 1 is a structural schematic diagram of a transmission assembly according to some implementations of the invention;
Fig. 2 is a sectional view of the transmission assembly according to some implementations of the invention;
Fig. 3 is an exploded view of the transmission assembly according to some implementations of the invention;
Fig. 4 is an enlarged view of part A in Fig. 2;
Fig. 5 is a structural schematic view of a coupling member and a planetary gear set according to some implementations of the invention;
Fig. 6 is an enlarged view of part B in Fig. 3;
Fig. 7 is a structural schematic diagram of a further first screw rod and a further coupling member according to some implementations of the invention;
Fig. 8 is an exploded view of a bottom-mounted transmission assembly according to some implementations of the invention;
Fig. 9 is a structural schematic diagram of a lifting column according to some implementations of the invention;
Fig. 10 is a structural schematic diagram of a lifting column in a vertical movement according to some implementations of the invention;

In the drawings:
drive 100, housing 101, electric motor 102, planetary reduction gear set 103, first sleeve 110, second sleeve 120, first screw rod 130, gripper block 131, collar 132, second screw rod 140, balancer 141, first nut 150, second nut 160;
planetary gear set 200, planetary carrier 210, attachment post 211, fixed shaft 220, planetary gear 230, outer ring gear 240, engaging groove 241;
coupling member 300, flange 301, plate body 310, peripheral skirt 320, insertion opening 330, notch 340, limiting block 350, bump 360, limiting recess 370, through-hole 380, bent segment 390;
fastener 400;
inner tube 500, intermediate tube 510, outer tube 520.

### DETAILED DESCRIPTION OF EMBODIMENTS

Hereinafter, the technical solutions of the invention will be explained and illustrated through embodiments with reference to the accompanying drawings. However, the embodiments described herein are only some embodiments of the invention, not all of them.

The terms "exemplary embodiments" and "some embodiments" referred to hereinafter means they are "described as examples, implementations or illustrations." Any embodiment described as an example shall not be construed as prior to or better than another embodiment. To better illustrate the invention, the various details are provided in the specific implementations below, and those skilled in the art shall understand, the invention can also be implemented without some of the details.

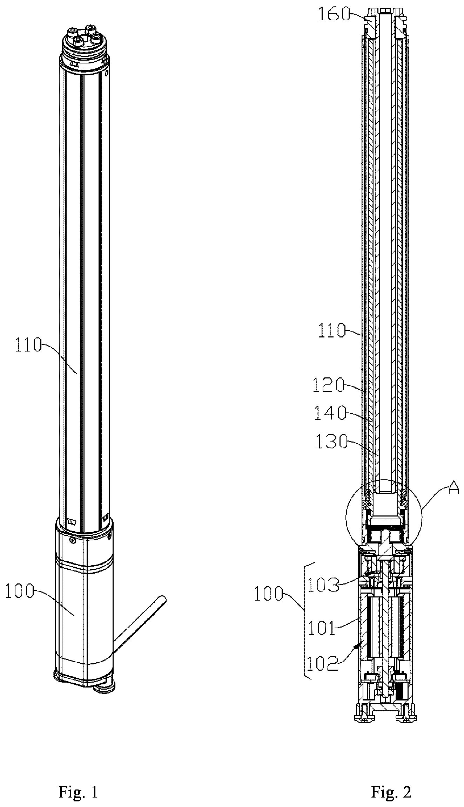

Referring to Figs. 1 through 6, an implementation of the invention describes a lifting column transmission assembly, comprising: a drive 100, a first sleeve 110, and a second sleeve 120 arranged in the first sleeve 110, inside the second sleeve 120 being arranged a first screw rod 130 and a second screw rod 140; the transmission assembly further comprises a planetary gear set 200 in transmission fit with a drive shaft of the drive 100; the planetary gear set 200 comprises a planetary carrier 210, a fixed shaft 220 arranged on the planetary carrier 210, a planetary gear 230 rotatably mounted on the fixed shaft 220, and an outer ring gear 240 meshing with the planetary gear 230; the first sleeve 110 is in transmission fit with the outer ring gear 240; the first sleeve 110 and the second sleeve 120 are operable to rotate synchronously; the second sleeve 120 is movable axially relative to the first sleeve 110; one end of the second sleeve 120 is connected to the first screw rod 130 in a threaded transmission manner, and an opposite end of the second sleeve 120 is connected to the second screw rod 140 in a threaded transmission manner, whereby the second screw rod 140 is driven to move axially relative to the first screw rod 130.

The transmission assembly described herein is applied to a lifting column to allow for the latter to implement a vertical movement. The drive 100, once being activated, can supply power to drive the planetary gear 230 to rotate, the rotating planetary gear 230 drives the outer ring gear 240 to rotate, the rotating outer ring gear 240 drives the first sleeve 110 to move, and then the moving first sleeve 110 brings the second sleeve 120 to rotate; the rotating second sleeve 120 is given an axial displacement due to its threaded fitting with the first screw rod 130 and the second screw rod 140 while driving one of the first screw rod 130 and the second screw rod 140 to move axially.

The planetary gear set 200 can transmit the power supplied by the drive 100 from inside to outside to the outer ring gear 240 so that the outer ring gear 240 drives the first sleeve 110 at the outermost side to rotate, whereby the first sleeve 110 transmits the power from outside to inside, resulting in a more stable power transmission during the lifting process of the transmission assembly. In conventional technologies, the planetary gear 230 would be driven to rotate so as to bring the planetary carrier 210 to rotate; a power output structure would be arranged on the planetary carrier 210, where the screw rod or sleeve is fitted with the output structure so that the screw rod or the sleeve is driven to extend or retract by the planetary carrier 210. Different from the conventional technologies, in the present application, the planetary carrier 210 maintains fixed, the output shaft of the drive 100 passes through the planetary carrier 210 to mesh with the planetary gear 230 to thereby drive the planetary gear 230 to rotate, and then the rotating planetary gear 230 drives the outer ring gear 240 to rotate, whereby the torque transmitted from the outer ring gear 240 to the first sleeve 110 is amplified, which increases load capacity of the transmission assembly. In addition, the larger torque reduces the instantaneous current of the drive 100 upon activation of the lifting column, which lowers failure probability of the drive 100 caused by an otherwise excessive instantaneous current.

The transmission fitting between the first sleeve 110 and the outer ring gear 240 may be implemented by direct contact therebetween or by an additional transmission structure that transmits power to the first sleeve 110; in some implementations, the first sleeve 110 sleeves over the outer ring gear 240, the outer ring of the outer ring gear 240 being spline-fitted with the inner wall of the first sleeve 110. By arranging the first sleeve 110 to sleeve over the outer ring gear 240, the spacing between the first sleeve 110 and the outer ring gear 240 is shortened, which can reduce the mounting distance to thereby reduce the length of the transmission assembly. In addition, this also increases the contact area between the first sleeve 110 and the outer ring gear 240, as well as the fitting strength therebetween, leading to a more stable transmission. If a connection structure connected to the first sleeve and the outer ring gear respectively were adopted to transmit power, it likely occurs that the connection structure between the first sleeve and the outer ring gear would be damaged under an excessive load. However, the spline-fitting manner adopted herein allows for the outer ring gear 240 to transmit power to the first sleeve 110 just by arranging the first sleeve 110 to sleeve over the outer ring gear 240.

In addition, an insertion groove may also be arranged on the outer ring gear 240, the first sleeve 110 being inserted in the insertion groove and spline-fitted with the inner wall of the insertion groove; this may also increase the contact area between the first sleeve 110 and the outer ring gear 240 to increase fitting strength, where the first sleeve 110 has a size smaller than that of the outer ring gear 240 so that the radial size of the transmission assembly can be reduced. However, if the lifting column has a large or very small size, arrangement of the insertion groove on the outer ring gear 240 would reduce the strength of the outer ring gear 240, so that if the load is too high, the excessive torque would cause the outer ring gear 240 deformed.

A coupling member 300 is further arranged on the planetary carrier 210; the coupling member 300 can axially limit the planetary gear 230, preventing the planetary gear 230 from axial displacement during transmission which would otherwise affect the meshing transmission between the planetary gear 230 and the outer ring gear 240.

One end of the outer ring gear 240 abuts against the planetary carrier 210, and an opposite end of the outer ring gear 240 abuts against the coupling member 300; the coupling member 300 and the planetary carrier 210 can axially limit the outer ring gear 240 to prevent axial displacement of the outer ring gear 240, which ensures stability during transmission; meanwhile, as the planetary gear 230 is limited by the coupling member 300, the outer ring gear 240 and the planetary gear 230 maintain relatively stationary in the axial direction during the transmission, which prevents wear to the teeth of the outer ring gear 240 and the planetary gear 230 otherwise affecting transmission efficiency.

During the process of transmission, the axial positions of the first sleeve 110 and the first screw rod 130 are fixed. While the first sleeve 110 is spline-fitted with the outer ring gear 240, the outer ring gear 240 can also limit the first sleeve 110 axially; one of the outer ring gear 240 and the first sleeve 110 is provided with a gripper block 131, the other one thereof is provided with an engaging groove 241, the engaging groove 241 and the gripper block 131 being fitted to fix the outer ring gear 240 on the first sleeve 110. The fitting between the gripper block 131 and the engaging groove 241 can limit axial displacement of the first sleeve 110 relative to the outer ring gear 240, preventing movement of the first sleeve 110 relative to the outer ring gear 240 causing disengagement which would otherwise interrupt power transmission. The first screw rod 130 is connected to the coupling member 300 so as to maintain stationary relative to the coupling member 300.

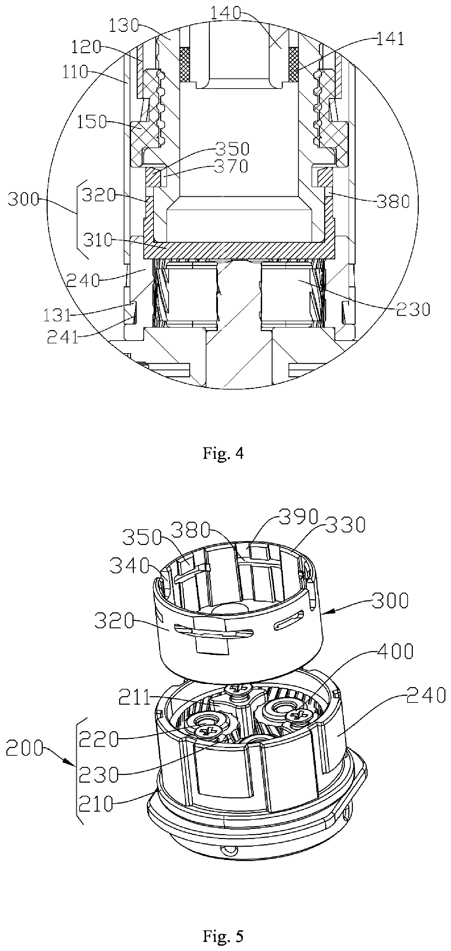

Figs. 4 through 6 illustrates an implementation of the invention, which describes a fitting structure between the first screw rod 130 and the coupling member 300.

A first limiting portion is arranged on the coupling member 300, and a second limiting portion fitted with the first limiting portion to allow for the first screw rod 130 and the coupling member 300 to maintain relatively stationary is arranged on the first screw rod 130. The coupling member 300 comprises a plate body 310 and a peripheral skirt 320 formed by extending from the peripheral edge of the plate body 310 along an axial direction of the first screw rod 130, the peripheral skirt 320 defining an insertion opening 330 configurable for inserting the first screw rod 130; the first limiting portion being arranged on the peripheral skirt 320, so that when the first screw rod 130 is fitted with the coupling member 300, one end of the first screw rod 130 is inserted in the insertion opening 330 so as to be fitted with the first limiting portion on the peripheral skirt 320; the peripheral skirt 320 and the insertion opening 330 defined by the peripheral skirt 320 play a role of retaining the position of the first screw rod 130 so as to facilitate fitting between the first limiting portion and the second limiting portion.

The first limiting portion comprises a notch 340 and a limiting block 350, and the second limiting portion comprises a bump 360 and a limiting recess 370, the bump 360 being fitted with the notch 340, the limiting block 350 being fitted with the limiting recess 370, whereby circumferential rotation and axial displacement of the first screw rod 130 relative to the coupling member 300 are limited.

In some implementations, the notch 340 is formed extending from the insertion opening 330 towards the direction of the plate body 310, one end of the notch 340 being open so that the peripheral skirt 320, without a need to be deformed, allows for the limiting block 350 to be directly inserted in the notch 340 during the process of inserting the first screw rod 130; by arranging the notch 340 along the axial direction of the first screw rod 130, a side wall of the notch 340 in the circumferential direction of the first screw rod 130 can abut against the bump 360 so as to limit circumferential movement of the bump 360 relative to the notch 340, whereby rotation of the first screw rod 130 relative to the coupling member 300 is limited. During the process of fitting, the remaining portion of the insertion opening 330 can abut against the bump 360 to limit insertion of the first screw rod 130, which facilitates assembly between the bump 360 and the notch 340.

The limiting block 350 projects out of the inner wall of the peripheral skirt 320. The inside diameter of the peripheral skirt 320, after subtracting the doubled thickness of the limiting block 350, is still greater than the outside diameter of the first screw rod 130, so that the limiting block 350 would not block the first screw rod 130 from being inserted in the insertion opening 330. Fitting between the bump block 360 and the notch 340 plays a role of retaining the position of the first screw rod 130, so that after the first screw rod 130 is inserted in the insertion opening 330, the limiting block 350 can be oriented to face the limiting recess 370; by bending the inner wall of the peripheral skirt 320, the limiting block 350 moves towards the direction of the limiting recess 370 and is gradually snapped in the limiting recess 370, achieving a riveting effect, which limits the first screw rod 130 from axial displacement relative to the coupling member 300. The coupling member 300 is a metallic member. The peripheral skirt 320, after being bent, maintains the bent state to retain the limiting block 350 in the limiting recess 370, whereby stability between the first screw rod 130 and the coupling member 300 is maintained.

In some implementations, the limiting recess 370 is arranged along the circumferential direction of the first screw rod 130 so that the limiting recess 370 has a larger size in the circumferential direction of the first screw rod 130. During the process of bending the peripheral skirt 320, since it cannot be guaranteed that the limiting block 350 moves in the axial centerline direction of the first screw rod 130 so that in actual assembly, the limiting block 350 would offset from the axial centerline of the first screw rod 130, the larger size of the limiting recess 370 allows an assembly error, which facilitates fitting between the limiting block 350 and the limiting recess 370 and lowers requirements on machining accuracy of the limiting block 350 and the limiting recess 370. In addition, a plurality of limiting blocks 350 are arranged on the peripheral skirt 320 and at least two sets of bumps 360 and two sets of notches 340 are also provided, where a limiting recess 370 is arranged between two adjacent bumps 360, one end of the limiting recess 370 being linked to one of the bumps 360, an opposite end of the limiting recess 370 being linked to another notch 340; in this way, a need is eliminated to separately arrange limiting recesses 370 at positions of the first screw rod 130 corresponding to respective limiting blocks 350, which not only enhances assembly efficiency, but also facilitates machining of the first screw rod 130.

The positions of the bumps and notches can be swapped, so do the positions of the limiting blocks and limiting recesses, i.e., the bumps and the limiting recesses are arranged on the peripheral skirt, while the notches and the limiting blocks are arranged on the first screw rod.

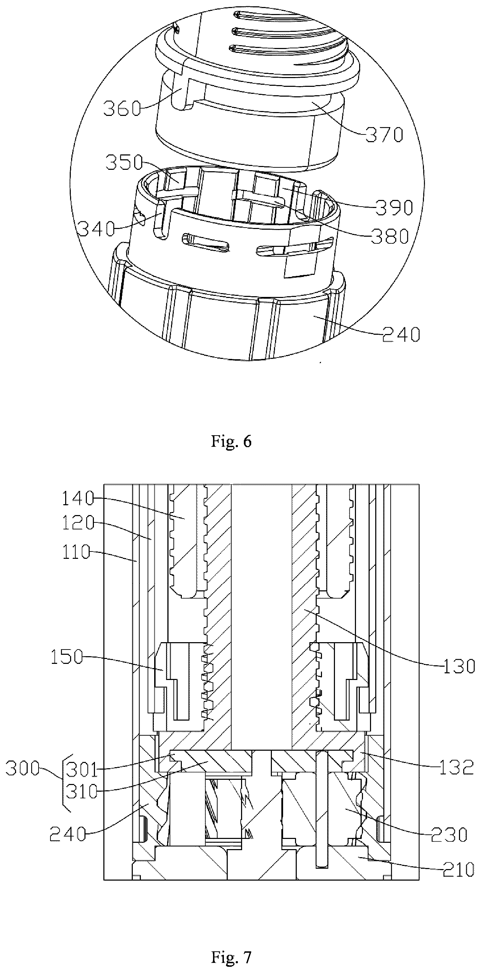

Referring to Figs. 5 and 6, to enhance assembly efficiency between the limiting block 350 and the limiting recess 370, in an implementation of the invention, a through hole 380 is formed on the peripheral skirt 320, an area between the through hole 380 and the insertion opening 330 being defined as a bent segment 390, the limiting block 350 being arranged on the bent segment 390, so that upon assembly, the bent segment 390 is bent to allow for fitting between the limiting block 350 and the limiting recess 370.

The area on the peripheral skirt 320 where the through hole 380 is arranged is less rigid, so that the bent segment 390 is easily bent relative to the plate body 310; in addition, the area on the peripheral skirt 320 where the bent segment 390 is bent may also be defined to ensure that after the bent segment 390 is bent, the limiting block 350 can be fitted with the limiting recess 370. A protruding structure may also be arranged on the peripheral skirt below the bent segment 390, the protruding structure being configurable to abut against a peripheral sidewall of the first screw rod 130 so as to maintain stability of the first screw rod 130 on the coupling member 300, whereby relative swing therebetween is prevented. In addition, the bent segment at both sides of the notch 340 becomes more easily bendable due to arrangement of the notch 340. Furthermore, a recessed groove may also be arranged on the peripheral skirt 320 to reduce rigidity of the peripheral skirt 320.

In an implementation of the invention, which is different from the implementations described *supra,* the first limiting portion and the second limiting portion are securely fitted so that the first screw rod and the coupling member maintain relatively stationary; the secure fitting here refers to one of screw fitting, insertion fitting, riveting, and snap fitting. The first limiting portion is formed of a locking member arranged on the peripheral skirt, and the second limiting portion is formed of a screw hole, the locking member being locked in the screw hole so that circumferential rotation and axial displacement of the first screw rod relative to the coupling member 300 are both limited.

Referring to Fig. 7, in an implementation of the invention, which is different from the implementations described *supra,* the coupling member 300 comprises a plate body 310; the first limiting portion is formed of a flange 301 raised outward from the peripheral edge of the plate body 310, and the second limiting portion is formed of a collar 132 extending from the first screw rod 130; the collar 132 envelops the flange 301 to limit circumferential rotation and axial displacement of the first screw rod 130 relative to the coupling member 300. In machining, the coupling member 300 is first manufactured, and then the first screw rod 130 is formed on the coupling member 300 by injection molding. The collar 132 protrudes above the edge of the plate body 310 in the radial direction, which can also abut against the outer ring gear 240 so as to axially limit the outer ring gear 240, preventing the outer ring gear 240 from axial displacement during the process of transmitting which would otherwise affect transmission. Although the first screw rod 130 and the coupling member 300 are held relatively stationary according to this approach, the machining process is complex and implemented strenuously; despite this, it is still an implementation of the invention.

In an implementation of the invention based on the implementations described *supra,* the first screw rod is a plastic screw rod, which may be formed by injection molding; the first screw rod needs to be connected to the coupling member. The injection molding manner facilitates forming a complex fitting structure on the first screw rod, which facilitates mass production of the first screw rod; in addition, the second limiting portion on the resulting first screw rod has a high machining accuracy, which facilitates fitting with the first limiting portion.

Referring to Fig. 5, in an implementation of the invention, a fitting structure between the coupling member 300 and the planetary carrier 210 is described.

The coupling member 300 and the planetary carrier 210 are connected via a fastener 400, and an attachment post 211 is arranged on the planetary carrier 210, the fastener 400 passing through the coupling member 300 and being then securely locked to the attachment post 211 to thereby mount the coupling member 300 on the planetary carrier 210. A position of the attachment post 211 may be set dependent on a portion of the coupling member 300 which needs to be fixed; as such, the attachment post 211 can be designed based on the actual structure of the lifting column. A plurality of attachment posts 211 are provided, so that the fastener 400 connects different portions of the coupling member 300 to the attachment posts 211, whereby fitting strength between the coupling member 300 and the planetary carrier 210 is enhanced, allowing for the coupling member 300 and the planetary carrier 210 to maintain relatively stationary.

Referring to Fig. , this implementation further discloses another solution, in which the fastener, after passing through the coupling member, is securely locked to the fixed shaft, whereby the coupling member is mounted on the planetary carrier.

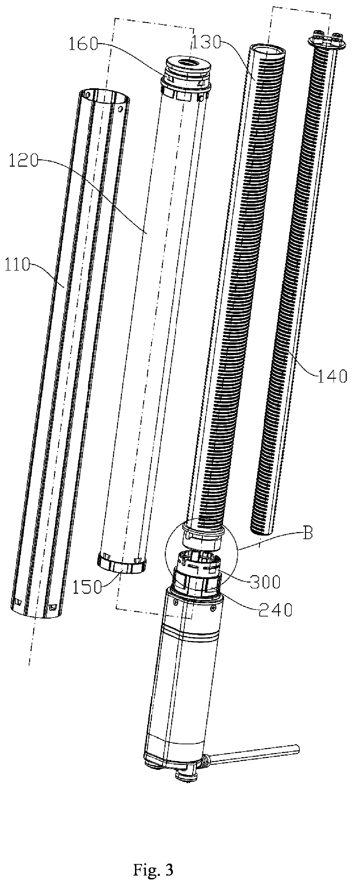

Referring to Fig. 3, in an implementation based on the implementations described *supra,* there is provided a fitting structure configured to fit the second sleeve 120 with the first screw rod 130 and the second screw rod 140.

A first nut 150 is mounted on the first screw rod 130 in a threaded fitting manner, the second sleeve 120 being linked to the first nut 150, the first nut 150 and the first sleeve 110 being spline-fitted, whereby the second sleeve 120 is driven to extend and retract relative to the first sleeve 110. The first sleeve 110, which is spline-fitted with the first nut 150, drives the first nut 150 to rotate synchronously, and the first nut 150, which is thread-fitted with the first screw rod 130, moves along the axial direction of the first screw rod 130, whereby the second sleeve 120 is pushed to extend and retract relative to the first sleeve 110.

The second screw rod 140 is arranged in the first screw rod 130, the second screw rod 140 projects out of the first screw rod 130, the second sleeve 120 is spline-fitted with the first sleeve 110, and a second nut 160 fitted with the second screw rod 140 is mounted at an end portion of the second sleeve 120, whereby the second screw rod 140 is driven to extend and retract relative to the first screw rod 130. The spline-fitting between the second sleeve 120 and the first sleeve 110 allows for synchronous rotation between the second sleeve 120 and the first sleeve 110; due to the large contact area and the high fitting strength between the second sleeve 120 and the first sleeve 110, the torque received at the position where the second sleeve 120 and the first nut 150 are connected can be reduced. The moving second sleeve 120 may bring the second nut 160 to move synchronously; the thread-fitting between the second nut 160 and the second screw rod 140 allows for the second nut 160 to bring the second screw rod 140 to move axially together, while on the lifting column, the second screw rod 140 would be attached to an external part to drive the part to lift; due to a limitation imposed by the external part, rotation of the second screw rod 140 is also limited; in this way, the second nut 160 also rotates relative to the second screw rod 140, driving the second screw rod 140 to move axially relative to the second nut 160, so that the second screw rod 140 moves at a higher velocity than the second sleeve 120. Since neither of the first screw rod 130 and the second screw rod 140 needs to rotate, a need of arranging an internal bearing is eliminated, which reduces manufacture cost. A balancer 141 may also be arranged at an end of the second screw rod 140 facing the connecting hole, the balancer 141 being slidingly fitted with an inner wall of the first screw rod 130 so as to stabilize the end portion of the second screw rod 140, which reduces swing during the process of the second screw rod 140 moving relative to the first screw rod 130.

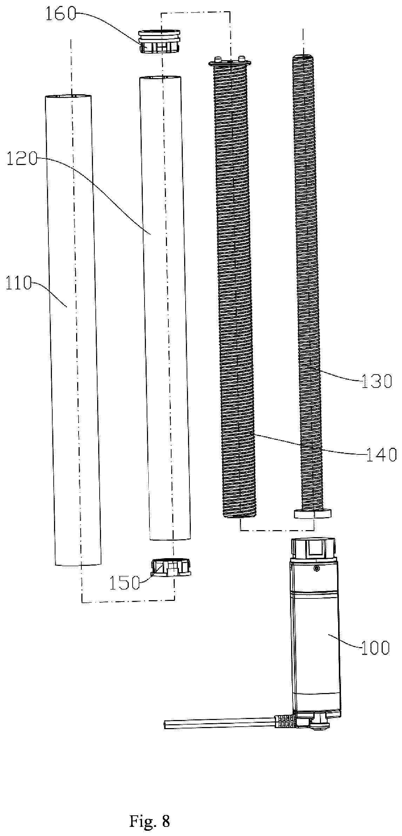

The transmission assembly described herein may be top mounted or bottom mounted. In the case of bottom mounting, as illustrated in Fig. 8, the second screw rod 140 sleeves over the first screw rod 130, the second sleeve 120 being spline-fitted with the first sleeve 110, a second nut 160 fitted with the second screw rod 140 being mounted at an end portion of the second sleeve 120, whereby the second screw rod 140 is driven to extend and retract relative to the first screw rod 130.

Referring to Fig. 2, in an implementation of the invention, the drive 100 comprises a housing 101 and an electric motor 102 disposed in the housing 101; in the planetary gear set 200, the planetary gear 230 is directly driven by the output shaft of the drive 100, so that the planetary gear set 200 does not have a speed reduction function; as such, a planetary reduction gear set 103 is arranged in the housing 101, the planetary reduction gear set 102 being configured to reduce a revolving speed outputted by the electric motor 102 so as to prevent the transmission assembly from lifting too fast. The count of the planetary reduction gear sets 103 may be arranged dependent on actual circumstances. In addition, the axial centerline of the output shaft of the electric motor 102 is parallel to the axial centerline of the first sleeve 110; in this invention, the transmission assembly is applied in a vertical column. In some implementations, the axial centerline of the output shaft of the electric motor 102 coincides with the axial centerline of the first sleeve 110; however, due to existence of machining errors, the coincidence state can hardly be achieved.

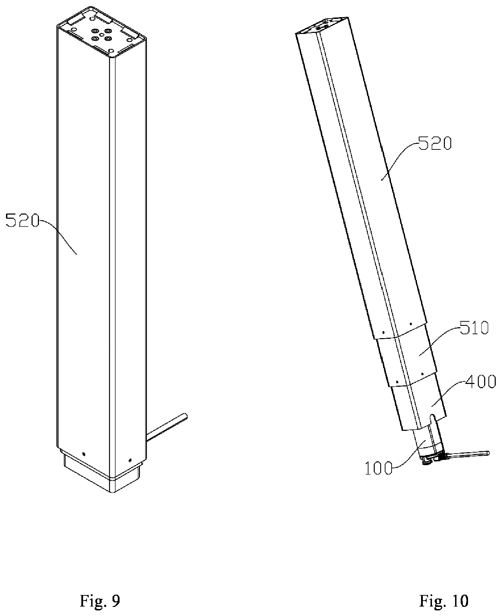

Referring to Figs. 9 and 10, the invention further discloses a lifting column, comprising an inner tube 400 maintaining fixed relative to the drive 100, an intermediate tube 410 sleeving over the inner tube 400, an outer tube 420 sleeving over the intermediate tube 410, and the transmission assembly described in any technical solution above, the outer tube 420 being mounted on the second screw rod 140, the intermediate tube 410 being mounted on the second sleeve 120 and being in rotating fit with the second sleeve 120.

The second sleeve 120 can bring the intermediate tube 410 to perform a vertical movement, and the first screw rod 130 can bring the outer tube 420 to perform a vertical movement. By applying the transmission assembly described herein, the lifting column is given a smooth vertical movement and can bear a high load.

What have been described above are only example embodiments of the present invention; however, the protection scope of the present invention is not limited thereto. A person skilled in the art should understand that various modifications can be made without departing from the scope of the invention as defined in the accompanying claims.

## Claims

1. A lifting column transmission assembly, comprising a drive (100), a first sleeve (110), and a second sleeve (120) disposed in the first sleeve (110), a first screw rod (130) and a second screw rod (140) being provided in the second sleeve (120), wherein the transmission assembly further comprises a planetary gear set (200) in transmission fit with a drive shaft of the drive (100); the planetary gear set (200) comprises a planetary gear (230) and an outer ring gear (240) meshing with the planetary gear (230); and one end of the second sleeve (120) is connected to the first screw rod (130) in a threaded transmission manner, and an opposite end of the second sleeve (120) is connected to the second screw rod (140) in a threaded transmission manner, **characterized in that** the first sleeve (110) is in transmission fit with the outer ring gear (240), the first sleeve (110) and the second sleeve (120) are operable to rotate synchronously, the first sleeve (110) and the second sleeve (120) are operable to telescope axially relative to each other and **in that** the second screw rod (140) is operable to telescope relative to the first screw rod (130), a first nut (150) being mounted on the first screw rod (130) in a thread fitting manner, the second sleeve (120) being connected to the first nut (150), the first nut (150) being spline-fitted with the first sleeve (110), whereby the second sleeve (120) is driven to telescope relative to the first sleeve (110), wherein the second screw rod (140) is disposed in the first screw rod (130), the second screw rod (140) projecting out of the first screw rod (130), the second sleeve (120) being spline-fitted with the first sleeve (110), a second nut (160) fitted with the second screw rod (140) being mounted at an end portion of the second sleeve (120), whereby the second screw rod (140) is driven to telescope relative to the first screw rod (130).

2. The lifting column transmission assembly according to claim 1, wherein the first sleeve (110) sleeves over the outer ring gear (240), an outer ring of the outer ring gear (240) being spline-fitted with an inner wall of the first sleeve (110).

3. The lifting column transmission assembly according to claim 2, wherein a gripper block (131) is arranged for one of the outer ring gear (240) and the first sleeve (110), and an engaging groove (241) is arranged for the other one of the outer ring gear (240) and the first sleeve (110), the engaging groove (241) being fitted with the gripper block (131) to secure the outer ring gear (240) on the first sleeve (110).

4. The lifting column transmission assembly according to claim 1, wherein an insertion groove is formed on the outer ring gear (240), the first sleeve (110) being inserted in the insertion groove and spline-fitted with an inner wall of the insertion groove.

5. The lifting column transmission assembly according to claim 1, wherein the planetary gear set (200) further comprises a planetary carrier (210) and a fixed shaft (220) mounted on the planetary carrier (210), the planetary gear (230) being rotatably mounted on the fixed shaft (220), a coupling member (300) configurable to axially limit the planetary gear (230) being provided on the planetary carrier (210).

6. The lifting column transmission assembly according to claim 5, wherein the coupling member (300) is attached to the planetary carrier (210) via a fastener (400), the fastener (400) passing through the coupling member (300) and being then securely locked on the fixed shaft (220) so as to mount the coupling member (300) on the planetary carrier (210); or, the coupling member (300) is attached to the planetary carrier (210) via a fastener (400), and an attachment post (211) is arranged on the planetary carrier, the fastener (400) passing through the coupling member (300) and being then securely locked on the attachment post (211) so as to mount the coupling member (300) on the planetary carrier (210).

7. The lifting column transmission assembly according to claim 5, wherein one end of the outer ring gear (240) abuts against the planetary carrier (210), and an opposite end of the outer ring gear (240) abuts against the coupling member (300).

8. The lifting column transmission assembly according to claim 1, wherein the planetary gear set (200) further comprises a planetary carrier (210), a coupling member (300) being arranged on the planetary carrier (210), the planetary gear (230) and the outer ring gear (240) being disposed between the coupling member (300) and the planetary carrier (210), the first screw rod (130) being connected to the coupling member (300), the second screw rod (140) being operable to telescope axially relative to the first screw rod (130).

9. The lifting column transmission assembly according to claim 8, wherein a first limiting portion is arranged on the coupling member (300), a second limiting portion is arranged on the first screw rod (130), and an insertion opening (330) is defined on the coupling member (300), the first screw rod (130) being inserted in the insertion opening (330) so that the first limiting portion and the second limiting portion are fitted to maintain the first screw rod (130) and the coupling member (300) relatively stationary.

10. The lifting column transmission assembly according to claim 8, wherein the coupling member (300) is formed of a plate body (310), one end of the first screw rod (130) connected to the coupling member (300) extending outwardly in a radial direction to form a collar (132) fitted with an edge of the plate body (310), one end of the outer ring gear (240) abutting against the planetary carrier (210), an opposite end of the outer ring gear (240) abutting against the collar (132).

11. The lifting column transmission assembly according to claim 1, wherein the second screw rod (140) sleeves over the first screw rod (130), the second sleeve (120) being spline-fitted with the first sleeve (110), a second nut (160) fitted with the second screw rod (140) being mounted at an end portion of the second sleeve (120), whereby the second screw rod is (140) driven to telescope relative to the first screw rod (130).

12. The lifting column transmission assembly according to any of claims 1 through 10, wherein the drive (100) comprises a housing (101) and an electric motor (102) disposed in the housing (101), an axial centerline of an output shaft of the electric motor (102) being parallel to an axial centerline of the first sleeve (110), at least one planetary reduction gear set (103) in transmission fit with the output shaft being arranged in the housing (101).

13. A lifting column, comprising the lifting column transmission assembly according to any of claims 1 through 12, and further comprising an inner tube (500) maintaining fixed relative to a drive (100), an intermediate tube (510) sleeving over the inner tube (500), and an outer tube (520) sleeving over the intermediate tube (510), the outer tube (520) being mounted on a first screw rod (130) or a second screw rod (140), the intermediate tube (510) being mounted on a second sleeve (120) and being in rotating fit with the second sleeve (120).

## Patentansprüche

1. Getriebebaugruppe einer Hubsäule, umfassend einen Antrieb (100), eine erste Hülse (110) und eine in der ersten Hülse (110) angeordnete zweite Hülse (120), wobei in der zweiten Hülse (120) eine erste Gewindestange (130) und eine zweite Gewindestange (140) vorgesehen sind, wobei die Getriebeanordnung ferner einen Planetengetriebesatz (200) umfasst, der in Antriebseingriff mit einer Antriebswelle des Antriebs (100) steht; der Planetengetriebesatz (200) ein Planetenrad (230) und einen mit dem Planetenrad (230) kämmenden Außenringzahnkranz (240) umfasst; und ein Ende der zweiten Hülse (120) mit der ersten Gewindestange (130) über eine Gewindeverbindung verbunden ist, und ein gegenüberliegendes Ende der zweiten Hülse (120) ist mit der zweiten Gewindestange (140) über eine Gewindeverbindung verbunden, **dadurch gekennzeichnet, dass** die erste Hülse (110) in Antriebseingriff mit dem Außenringzahnkranz (240) steht, die erste Hülse (110) und die zweite Hülse (120) so betätigbar sind, dass sie sich synchron drehen, die erste Hülse (110) und die zweite Hülse (120) so betätigbar sind, dass sie sich axial relativ zueinander teleskopartig verschieben lassen, und dass die zweite Gewindestange (140) relativ zur ersten Gewindestange (130) teleskopartig verschiebbar ist, wobei eine erste Mutter (150) gewindeverbunden auf der ersten Gewindestange (130) angebracht ist, die zweite Hülse (120) mit der ersten Mutter (150) verbunden ist, die erste Mutter (150) keilverzahnt mit der ersten Hülse (110) verbunden ist, wodurch die zweite Hülse (120) relativ zur ersten Hülse (110) teleskopiert wird, wobei die zweite Gewindestange (140) in der ersten Gewindestange (130) angeordnet ist, wobei die zweite Gewindestange (140) aus der ersten Gewindestange (130) herausragt, wobei die zweite Hülse (120) mit der ersten Hülse (110) keilverzahnt ist, wobei an einem Endabschnitt der zweiten Hülse (120) eine zweite Mutter (160) angebracht ist, die mit der zweiten Gewindestange (140) in Eingriff steht, wodurch die zweite Gewindestange (140) relativ zur ersten Gewindestange (130) teleskopartig verschoben wird.

2. Getriebebaugruppe einer Hubsäule nach Anspruch 1, wobei die erste Hülse (110) über den Außenringzahnkranz (240) gestülpt ist, wobei ein Außenring des Außenringzahnkranzes (240) mit einer Innenwand der ersten Hülse (110) keilverzahnt ist.

3. Getriebebaugruppe einer Hubsäule nach Anspruch 2, wobei ein Greifblock (131) für entweder den Außenringzahnkranz (240) oder die erste Hülse (110) vorgesehen ist und eine Eingriffsnut (241) für das jeweils andere Teil, also entweder den Außenringzahnkranz (240) oder die erste Hülse (110), vorgesehen ist, wobei die Eingriffsnut (241) mit dem Greifblock (131) in Eingriff steht, um den Außenringzahnkranz (240) an der ersten Hülse (110) zu befestigen.

4. Getriebebaugruppe einer Hubsäule nach Anspruch 1, wobei an dem Außenringzahnkranz (240) eine Einstecknut ausgebildet ist, wobei die erste Hülse (110) in die Einstecknut eingeführt ist und mit einer Innenwand der Einstecknut keilverzahnt ist.

5. Getriebebaugruppe einer Hubsäule nach Anspruch 1, wobei der Planetengetriebesatz (200) ferner einen Planetenträger (210) und eine auf dem Planetenträger (210) montierte feste Welle (220) umfasst, wobei das Planetenrad (230) drehbar auf der festen Welle (220) gelagert ist, wobei an dem Planetenträger (210) ein Kupplungselement (300) vorgesehen ist, das so konfigurierbar ist, dass es das Planetenrad (230) in axialer Richtung begrenzt.

6. Getriebebaugruppe einer Hubsäule nach Anspruch 5, wobei das Kupplungselement (300) über ein Befestigungselement (400) am Planetenträger (210) befestigt ist, wobei das Befestigungselement (400) durch das Kupplungselement (300) hindurchgeführt und anschließend an der feststehenden Welle (220) sicher arretiert wird, um das Kupplungselement (300) am Planetenträger (210) zu befestigen; oder das Kupplungselement (300) über ein Befestigungselement (400) am Planetenträger (210) befestigt ist, und ein Befestigungszapfen (211) ist am Planetenträger angeordnet, wobei das Befestigungselement (400) durch das Kupplungselement (300) hindurchgeführt und anschließend am Befestigungszapfen (211) sicher arretiert wird, um das Kupplungselement (300) am Planetenträger (210) zu befestigen.

7. Getriebebaugruppe einer Hubsäule nach Anspruch 5, wobei ein Ende des äußeren Zahnkranzes (240) am Planetenträger (210) anliegt und ein gegenüberliegendes Ende des äußeren Zahnkranzes (240) am Kupplungselement (300) anliegt.

8. Getriebebaugruppe einer Hubsäule nach Anspruch 1, wobei der Planetengetriebesatz (200) ferner einen Planetenträger (210) umfasst, wobei ein Kupplungselement (300) am Planetenträger (210) angeordnet ist, wobei das Planetenrad (230) und der Außenringzahnkranz (240) zwischen dem Kupplungselement (300) und dem Planetenträger (210) angeordnet sind, wobei die erste Gewindestange (130) mit dem Kupplungselement (300) verbunden ist, wobei die zweite Gewindestange (140) so betätigbar ist, dass sie sich axial relativ zur ersten Gewindestange (130) teleskopartig verschieben lässt.

9. Getriebebaugruppe einer Hubsäule nach Anspruch 8, wobei ein erster Begrenzungsabschnitt am Kupplungselement (300) angeordnet ist, ein zweiter Begrenzungsabschnitt an der ersten Gewindestange (130) angeordnet ist und eine Einführöffnung (330) am Kupplungselement (300) ausgebildet ist, wobei die erste Gewindestange (130) so in die Einführöffnung (330) eingeführt ist, dass der erste Begrenzungsabschnitt und der zweite Begrenzungsabschnitt in Eingriff stehen, um die erste Gewindestange (130) und das Kupplungselement (300) relativ zueinander unbeweglich zu halten.

10. Getriebebaugruppe einer Hubsäule nach Anspruch 8, wobei das Kupplungselement (300) aus einem Plattenkörper (310) gebildet ist, wobei sich ein Ende der ersten Gewindestange (130), das mit dem Kupplungselement (300) verbunden ist, in radialer Richtung nach außen erstreckt, um einen Kragen (132) zu bilden, der mit einer Kante des Plattenkörpers (310) in Eingriff steht, wobei ein Ende des Außenringzahnkranzes (240) an dem Planetenträger (210) anliegt und ein gegenüberliegendes Ende des Außenringzahnkranzes (240) an dem Kragen (132) anliegt.

11. Getriebebaugruppe einer Hubsäule nach Anspruch 1, wobei die zweite Gewindestange (140) über die erste Gewindestange (130) geschoben ist, wobei die zweite Hülse (120) mit der ersten Hülse (110) keilverzahnt ist und eine zweite Mutter (160), die mit der zweiten Gewindestange (140) in Eingriff steht, an einem Endabschnitt der zweiten Hülse (120) angebracht ist, wodurch die zweite Gewindestange (140) relativ zur ersten Gewindestange (130) teleskopartig verschoben wird.

12. Getriebebaugruppe einer Hubsäule nach einem der Ansprüche 1 bis 10, wobei der Antrieb (100) ein Gehäuse (101) und einen in dem Gehäuse (101) angeordneten Elektromotor (102) umfasst, wobei eine axiale Mittellinie einer Abtriebswelle des Elektromotors (102) parallel zu einer axialen Mittellinie der ersten Hülse (110) verläuft, wobei im Gehäuse (101) mindestens ein Planetengetriebe (103) angeordnet ist, das mit der Abtriebswelle in Antriebseingriff steht.

13. Hubsäule, umfassend die Getriebebaugruppe einer Hubsäule nach einem der Ansprüche 1 bis 12, sowie ferner ein Innenrohr (500), das relativ zu einem Antrieb (100) feststehend gehalten wird, ein Zwischenrohr (510), das über das Innenrohr (500) gestülpt ist, sowie ein Außenrohr (520), das über das Zwischenrohr (510) gestülpt ist, wobei das Außenrohr (520) auf einer ersten Gewindestange (130) oder einer zweiten Gewindestange (140) angebracht ist, wobei das Zwischenrohr (510) auf einer zweiten Hülse (120) angebracht ist und mit der zweiten Hülse (120) drehfest verbunden ist.

## Revendications

1. Ensemble de transmission de colonne de levage, comprenant un entraînement (100), un premier manchon (110) et un second manchon (120) disposé dans le premier manchon (110), une première tige filetée (130) et une seconde tige filetée (140) étant prévues dans le second manchon (120), dans lequel l'ensemble de transmission comprend en outre un train d'engrenages planétaires (200) en ajustement de transmission avec un arbre d'entraînement de l'entraînement (100) ; le train d'engrenages planétaires (200) comprend un engrenage planétaire (230) et une couronne dentée externe (240) s'engrenant avec l'engrenage planétaire (230) ; et une extrémité du second manchon (120) est reliée à la première tige filetée (130) en transmission filetée, et une extrémité opposée du second manchon (120) est reliée à la seconde tige filetée (140) en transmission filetée, **caractérisé en ce que** le premier manchon (110) est en ajustement de transmission avec la couronne dentée externe (240), le premier manchon (110) et le second manchon (120) sont aptes à tourner de manière synchrone, le premier manchon (110) et le second manchon (120) sont aptes à se télescoper axialement l'un par rapport à l'autre, et **en ce que** la seconde tige filetée (140) est apte à se télescoper par rapport à la première tige filetée (130), un premier écrou (150) étant monté sur la première tige filetée (130) en ajustement au filetage, le second manchon (120) étant relié au premier écrou (150), le premier écrou (150) étant ajusté par cannelures avec le premier manchon (110), ce qui entraîne le second manchon (120) à se télescoper par rapport au premier manchon (110), la seconde tige filetée (140) étant disposée dans la première tige filetée (130), la seconde tige filetée (140) faisant saillie hors de la première tige filetée (130), le second manchon (120) étant ajusté par cannelures avec le premier manchon (110), un second écrou (160) ajusté sur la seconde tige filetée (140) étant fixé à une extrémité du second manchon (120), ce qui amène la seconde tige filetée (140) à se télescoper par rapport à la première tige filetée (130).

2. Ensemble de transmission de colonne de levage selon la revendication 1, dans lequel le premier manchon (110) s'emmanche sur la couronne dentée externe (240), une couronne externe de la couronne dentée externe (240) étant ajustée par cannelures avec une paroi interne du premier manchon (110).

3. Ensemble de transmission de colonne de levage selon la revendication 2, dans lequel un bloc de préhension (131) est agencé pour l'un parmi la couronne dentée externe (240) et le premier manchon (110), et une rainure de mise en prise (241) est agencée pour l'autre parmi la couronne dentée externe (240) et le premier manchon (110), la rainure de mise en prise (241) étant ajustée au bloc de préhension (131) afin de fixer la couronne dentée externe (240) sur le premier manchon (110).

4. Ensemble de transmission de colonne de levage selon la revendication 1, dans lequel une rainure d'insertion est formée sur la couronne dentée externe (240), le premier manchon (110) étant inséré dans ladite rainure d'insertion et s'ajustant par cannelures avec une paroi intérieure de celle-ci.

5. Ensemble de transmission de colonne de levage selon la revendication 1, dans lequel le train d'engrenages planétaires (200) comprend en outre un support planétaire (210) et un arbre fixe (220) monté sur le support planétaire (210), l'engrenage planétaire (230) étant monté de manière rotative sur l'arbre fixe (220), un élément d'accouplement (300), configuré pour limiter axialement l'engrenage planétaire (230), étant prévu sur le support planétaire (210).

6. Ensemble de transmission de colonne de levage selon la revendication 5, dans lequel l'élément d'accouplement (300) est fixé au support planétaire (210) au moyen d'un élément de fixation (400), l'élément de fixation (400) traversant l'élément d'accouplement (300) puis étant solidement verrouillé sur l'arbre fixe (220) de manière à monter l'élément d'accouplement (300) sur le support planétaire (210) ; ou bien, l'élément d'accouplement (300) est fixé au support planétaire (210) au moyen d'un élément de fixation (400), et un montant de fixation (211) est agencé sur le porte-satellites, l'élément de fixation (400) traversant l'élément d'accouplement (300) puis étant solidement verrouillé sur le montant de fixation (211) de manière à monter l'élément d'accouplement (300) sur le support planétaire (210).

7. Ensemble de transmission de colonne de levage selon la revendication 5, dans lequel une extrémité de la couronne dentée externe (240) vient en butée contre le support planétaire (210), et une extrémité opposée de la couronne dentée externe (240) vient en butée contre l'élément d'accouplement (300).

8. Ensemble de transmission de colonne de levage selon la revendication 1, dans lequel le train d'engrenages planétaires (200) comprend en outre un support planétaire (210), un élément d'accouplement (300) étant agencé sur le support planétaire (210), l'engrenage planétaire (230) et la couronne dentée externe (240) étant disposés entre l'élément d'accouplement (300) et le support planétaire (210), la première tige filetée (130) étant reliée à l'élément d'accouplement (300), la seconde tige filetée (140) étant apte à se télescoper axialement par rapport à la première tige filetée (130).

9. Ensemble de transmission de colonne de levage selon la revendication 8, dans lequel une première partie de limitation est agencée sur l'élément d'accouplement (300), une seconde partie de limitation est agencée sur la première tige filetée (130), et une ouverture d'insertion (330) est définie sur l'élément d'accouplement (300), la première tige filetée (130) étant insérée dans l'ouverture d'insertion (330) de telle sorte que la première partie de limitation et la seconde partie de limitation sont ajustées pour maintenir la première tige filetée (130) et l'élément d'accouplement (300) relativement immobiles.

10. Ensemble de transmission de colonne de levage selon la revendication 8, dans lequel l'élément d'accouplement (300) est constitué d'un corps de plaque (310), une extrémité de la première tige filetée (130), reliée à l'élément d'accouplement (300), s'étendant vers l'extérieur dans une direction radiale pour former un collier (132) ajusté sur un bord du corps de plaque (310), une extrémité de la couronne dentée externe (240) venant en butée contre le support planétaire (210), une extrémité opposée de la couronne dentée externe (240) venant en butée contre le collier (132).

11. Ensemble de transmission de colonne de levage selon la revendication 1, dans lequel la seconde tige filetée (140) est emmanchée sur la première tige filetée (130), le second manchon (120) étant ajusté par cannelures avec le premier manchon (110), un second écrou (160) ajusté sur la seconde tige filetée (140) étant fixé à une extrémité du second manchon (120), ce qui permet à la seconde tige filetée (140) d'être entraînée de manière à se téléscoper par rapport à la première tige filetée (130).

12. Ensemble de transmission de colonne de levage selon l'une quelconque des revendications 1 à 10, dans lequel l'entraînement (100) comprend un boîtier (101) et un moteur électrique (102) disposé dans le boîtier (101), une ligne centrale axiale d'un arbre de sortie du moteur électrique (102) étant parallèle à une ligne centrale axiale du premier manchon (110), au moins un train d'engrenages de réduction planétaires (103), en ajustement de transmission avec l'arbre de sortie, étant agencé dans le boîtier (101).

13. Colonne de levage, comprenant l'ensemble de transmission de colonne de levage selon l'une quelconque des revendications 1 à 12, et comprenant en outre un tube interne (500) maintenu fixe par rapport à un entraînement (100), un tube intermédiaire (510) emmanché sur le tube interne (500), et un tube externe (520) emmanché sur le tube intermédiaire (510), le tube externe (520) étant monté sur une première tige filetée (130) ou une seconde tige filetée (140), le tube intermédiaire (510) étant monté sur un second manchon (120) et étant en ajustement rotatif avec le second manchon (120).
